# EUROPEAN PATENT SPECIFICATION

(11) **EP 2 918 470 B1**
(45) Date of publication and mention of the grant of the patent: **07.11.2018**
(21) Application number: 14184081.9
(22) Date of filing: 09.09.2014
(51) Int. Cl.: B60W 50/14, B60K 35/00, G05B 23/02, B60W 50/00

(54) **System and method for controlling the display of service fields**
System und Verfahren zur Steuerung der Anzeige von Dienstfeldern
Système et procédé pour commander l'affichage de champs de service

(30) Priority: 11.03.2014 CN 201410087824
(43) Date of publication of application: 16.09.2015
(60) Divisional application: 17154320.0
(73) Proprietor: Bayerische Motoren Werke Aktiengesellschaft, 80809 München (DE); BMW Brilliance Automotive Ltd., Shenyang Liaoning (CN)
(72) Inventor: Borchers, Michael, 80939 Muenchen (DE); Hundt, Wolfgang, 80339 München (DE); Cogiel, Janus, 80804 Muenchen (DE); Schnelle, Frank, 80995 Muenchen (DE); Pastoor, Patrick, 80636 München (DE); Saeglitz, Thomas, 81247 Muenchen (DE); Choi, Ne-Hyun, 100026 Beijing (CN)
(74) Representative: Hahner, Ralph

(56) References cited:
- DE-A1- 10 301 952
- DE-A1-102009 013 806
- US-A1- 2006 069 520
- US-A1- 2011 224 841
- US-A1- 2012 065 900
- US-A1- 2013 244 210
- "Inspektion", , 30 May 2013 (2013-05-30), XP002750772, Retrieved from the Internet: URL:http://web.archive.org/web/20130530050 855/http://www.t4-wiki.de/wiki/Inspektion [retrieved on 2015-11-11]

## Description

### FIELD OF THE INVENTION

The present invention relates in general to the field of controlling the display of service fields, and in more particular, to a system and associated method for flexibly displaying service fields about status of service relevant components.

### BACKGROUND OF THE INVENTION

The increasing popularity of motor vehicles facilitates various researches about the motor vehicles, including maintenance of the motor vehicles. Each driver has his/her own driving habits, determining the time and contents of the required maintenance. Just carrying out according to the average distance given by the Owner's Handbook for Vehicle is often too early (e.g., if the driver is usually driving very cautious and slowly) thus wasting time and money, or too late (e.g., if the driver is usually driving sportive) thus influencing the condition of the vehicle, which may even endanger the vehicle occupants and other road users.

US 20120065900 A1 refers to a life monitor system for an electric machine comprising:
a temperature sensor secured to a component of the electric machine configured to sense a temperature of the component at one or more time intervals;
an engine control unit operably connected to the temperature sensor configured to calculate a remaining life of the component of the electric machine compared to a selected threshold, based on temperature data from the temperature sensor; and
a warning indicator operably connected to the engine control unit configured to be activated when the remaining life of the component falls below the selected threshold.

To overcome the above defects, Condition Based Service (CBS) was introduced in the market. CBS is an on-board monitor system proposed by BMW Corp., which monitors the condition of the vehicles in real time through numerous sensors and advanced algorithms. CBS can intelligently estimate current and future service requirements of the vehicles according to individual driver's driving habits and the distance travelled, the climate, the wear of the parts and the consumption of the engine oil etc. CBS thus provides the driver with tailored information about the scope of required maintenance work adapted to his/her personal driving standards, so that his/her vehicle will always be reliably operational.

Information on maintenance requirements is continually saved by CBS. By means of a remote control, the service advisor of a service dealer can read out this data from the remote control and suggest a set of routine maintenances optimized on this basis.

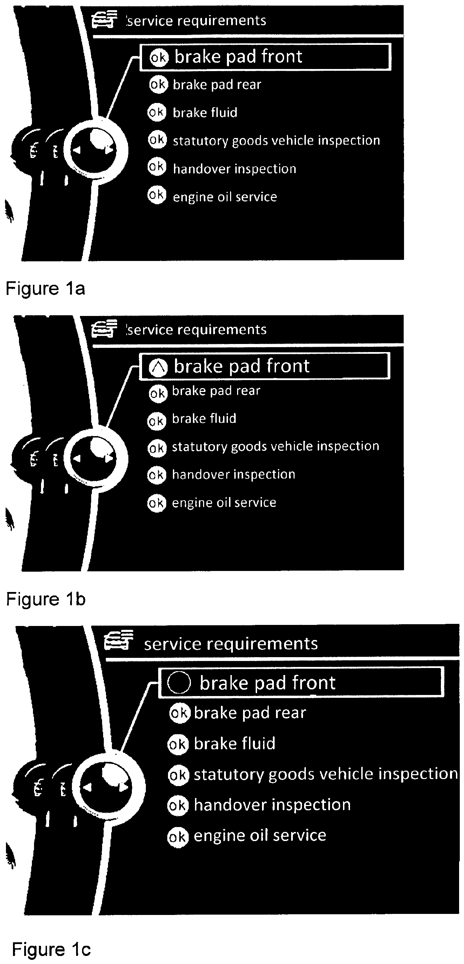

The distance to be driven or the time to the next maintenance may be displayed briefly in the vehicle's instrument cluster after switching on the ignition. The driver can have the service fields and respective events, such as residual distances and residual times for selected maintenance tasks including any legally prescribed dates displayed on the Central Information Display (CID), also known as Head Unit or Control Display, as shown in Figs.1A-1C. Within the service fields, symbols can be shown which indicate the service/maintenance status. In Fig. 1A, everything is ok and the symbols can be shown as green circular surfaces containing the word "OK", i.e. indicating that currently no service is required. In Fig. 1B, circular surface in service field "brake pad front" changes from green to yellow and contains a warning triangle, i.e. brake pad front will need some service within a given time or distance. In Fig. 1C, circular surface for "brake pad front" changes from yellow to red, it needs some service as soon as possible. It should be noted that, although only brake pad front, brake pad rear, brake fluid, statutory goods vehicle inspection, handover inspection and engine oil service are shown in Figs. 1A-1C, it will be appreciated that the displayed service requirements are not limited to above events. Some events could be left and other events can be included, such as for battery, particle filter etc.

The present CBS system has a fixed scheme of displayed fields for service related events (e.g. brake pad front, brake pad rear, engine oil etc.), in which every event, such as the engine oil will be shown from 100% to 0% (30000 km to 0 or - xy km). At a specific level (e.g., "yellow") the car will send a teleservice call (via head unit) and inform the dealer. However, it is not flexible with regard to the scheme of displayed fields.

Thus there is a need for the flexibility of the service information presented to a driver.

### SUMMARY OF THE INVENTION

The present invention provides an advanced Condition Based Service system- the Condition Based Repair system- to address the shortage of the current CBS. An aspect of the present invention is to have a well-arranged display of service information which enables the driver to easily recognize the status of the vehicle.

According to the present invention, only the service field about the status of service-relevant component which is relevant within short to medium time frame is displayed, that is, when the status of the service-relevant component is up to standard, the corresponding service field will not be displayed, and the corresponding service field is only displayed when the status of the service-relevant component is not up to standard. In line with the invention, information on service requirements is continually saved in a remote control.

In accordance with an exemplary embodiment of the present invention, a system for controlling the display of at least one service field about the status of at least one service-relevant component of a vehicle is provided, comprising: a display configured to display said service field; a master connected to said display; an electronic control unit (ECU) comprising a client; and at least one sensor connected to said client and configured to sense the status of said component, wherein said master is configured to control the display to display said service field about said status only when said status is not up to a standard.

In an example of the present invention, the status is the service requirements of the components of the vehicle.

In another example of the present invention, the system further comprises an instrument cluster for displaying the distance to be driven or time to the next service for a specific period after switching on the ignition.

In another example of the present invention, the system further comprises a total distance recorder configured to record the total distance travelled through a total distance counter.

In another example of the present invention, the client includes: an inputting unit configured to read in the following data for each service relevant component: sensor data from the plurality of sensors; distance data from the total distance recorder; and time data from a clock which may be integrated in the vehicle; a parameter database containing parameters for each service relevant component; a plurality of algorithms units configured to calculate remaining distances and characteristic values for each service relevant component; and an outputting unit configured to forward the calculated remaining distances and characteristic values for each service relevant component to said master.

In another example of the present invention, the master includes: a threshold database containing threshold values for each service relevant component; a plurality of comparators configured to: compare the calculated remaining distance with corresponding threshold distance stored in the threshold database; compare the time data with corresponding threshold time stored in the threshold database; compare the calculated characteristic value with the corresponding threshold value stored in the threshold database; and a control unit configured to control the display to display the respective service field only when at least one of the following is met: the time data is equal to or later than the threshold time, the calculated remaining distance is equal to or less than the threshold distance and the calculated characteristic value is equal to or less than the threshold characteristic value.

In another example of the present invention, the client includes: an inputting unit configured to read in the following data for each service relevant component: sensor data from the plurality of sensors; distance data from the total distance recorder; and time data from a clock which may be integrated in the vehicle; a parameter database containing parameters for each service relevant component; a plurality of algorithms units configured to calculate remaining distances and characteristic values for each service relevant component; a threshold database containing threshold values for each service relevant component; and a plurality of comparators configured to: compare the calculated remaining distance with corresponding threshold distance stored in the threshold database; compare the time data with corresponding threshold time stored in the threshold database; compare the calculated characteristic value with corresponding threshold value stored in the threshold database.

In another example of the present invention, the master includes: a control unit configured to control the display to display the respective service field only when at least one of the following is meet: the time data is equal to or later than the threshold time, the calculated remaining distance is equal to or less than the threshold distance and the calculated characteristic value is equal to or less than the threshold characteristic value.

In another example of the present invention, the system further comprises: a teleservice module connected to the instrument cluster, configured to connect the vehicle to a service centre of a service dealer and transmits data of the vehicle's service requirements in advance to the service centre when the status of the service relevant component turns to not up to standard. The teleservice module and/or the service centre may comprise electronic components, in particular wired and/or wireless data interfaces, computer components and/or respective computer program modules to control data transfer and/or to process data.

In accordance with another exemplary embodiment of the present invention, a method for controlling the display of at least one service field about the status of at least one service-relevant component on a display of a vehicle is provided, comprising: receiving data relating to said status; processing said data; and displaying said service field about the status on said display only when said status is not up to standard. In line with the invention, information on service requirements is continually saved in a remote control.

In an example of the present invention, the status is the service requirements of the components of the vehicle.

In another example of the present invention, the method further comprises: displaying the distance to be driven or time to the next service for a specific period on an instrument cluster after switching on the ignition.

In another example of the present invention, the method further comprises: recording the total distance travelled through a total distance counter.

In another example of the present invention, receiving data relating to said status comprises: reading in the following data for each service relevant component: sensor data from the plurality of sensors; distance data from the total distance recorder; and time data from a clock. In an advantageous embodiment the clock is integrated in the car, in particular within an ECU or within an instrument display.

In another example of the present invention, processing said data comprises: calculating remaining distances and characteristic values for each service relevant component; comparing the calculated remaining distance with corresponding threshold distance stored in a threshold database; comparing the time data with corresponding threshold time stored in the threshold database; compare the calculated characteristic value with corresponding threshold value stored in the threshold database.

In another example of the present invention, displaying said service field about the status on said display only when said status is not up to standard comprises: controlling the display to display the respective service field only when at least one of the following is meet: the time data is equal to or later than the threshold time, the calculated remaining distance is equal to or less than the threshold distance and the calculated characteristic value is equal to or less than the threshold characteristic value.

In another example of the present invention, processing said data is performed by a client.

In another example of the present invention, the step of controlling the display to display the service field is performed by a master.

In another example of the present invention, wherein both steps of processing said data and controlling the display to display the service field are performed by a master.

Further scope of applicability of the present invention will become apparent from the detailed description given hereinafter. However, it should be understood that the detailed description and specific examples, while indicating preferred embodiments of the invention, are given by way of illustration only, since various changes and modifications within the scope of the invention will become apparent to those skilled in the art from the following detailed description.

### BRIEF DESCRIPTION OF THE DRAWINGS

The above and other aspects and advantages of the present invention will become apparent from the following detailed description of exemplary embodiments taken in conjunction with the accompanying drawings which illustrate, by way of example, the principles of the invention.
Figs. 1A-1C illustrates display of service requirements in service fields within Head-Unit / CID according to state of the art, BMW Condition Based Service CBS 5;
Figs. 2A-2C illustrates the display of service requirements in service fields within Head-Unit / CID according to an exemplary embodiment of the present invention;
Fig. 3 illustrates a block diagram of the Condition Based Repair system in accordance with an exemplary embodiment of the present invention;
Fig. 4 illustrates a block diagram of a client in the Condition Based Repair system in accordance with an exemplary embodiment of the present invention;
Fig. 5 illustrates a block diagram of a master in the Condition Based Repair system in accordance with an exemplary embodiment of the present invention;
Fig. 6 illustrates a block diagram of a client in the Condition Based Repair system in accordance with another exemplary embodiment of the present invention;
Fig. 7 illustrates a flow chart showing the controlling of the display of the service field about the status of service relevant components in accordance with an exemplary embodiment of the present invention.
Fig. 8 illustrates a flow chart showing the controlling of the display of the service field about the status of service relevant components in accordance with another exemplary embodiment of the present invention.
Fig. 9 illustrates a flow chart showing the controlling of the display of the service field about the status of service relevant components in accordance with yet another exemplary embodiment of the present invention.
Fig. 10 illustrates a flow chart showing the controlling of the display of the service field about the status of service relevant components in accordance with still another exemplary embodiment of the present invention.

### DETAILED DESCRIPTION OF THE PREFERRED EMBODIMENTS

In the following detailed description, numerous specific details are set forth to provide a thorough understanding of the described exemplary embodiments. It will be apparent, however, to one skilled in the art that the described embodiments can be practiced without some or all of these specific details. In other exemplary embodiments, well known structures or process steps have not been described in detail in order to avoid unnecessarily obscuring the concept of the present invention.

The present invention provides a Condition Based Repair (CBR) system for flexibly displaying service fields about the status of service relevant components of a vehicle. The system enables the driver to easily recognize the status of the vehicle. For the present description, the term "service" should be interpreted broadly. It comprises but is not limited to the term "maintenance".

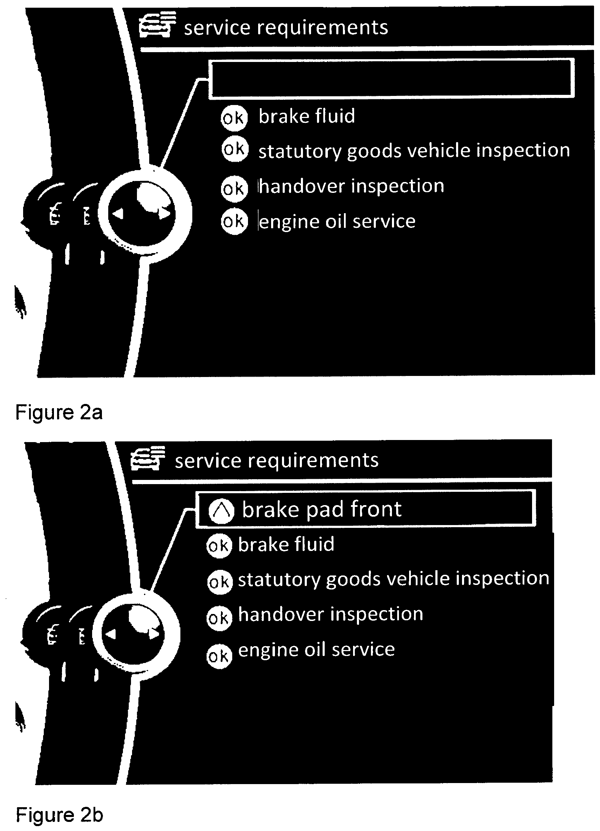

In accordance with an exemplary embodiment of the present invention, in the present invented CBR system, when the status of the service relevant components is up to standard, the information about the status will not be displayed, and the information is only displayed when the status of the service relevant components is not up to standard. Thus there is an additional possibility for specific parts, the information about the status of the service relevant components (e.g., the engine oil) will not be shown from 100%, i.e., when the status of the service relevant components is up to standard (e.g., denoted as "green"). The information about the status of the service relevant components will only be displayed when the status becomes not up to standard, e.g., when the level becomes "yellow" and the teleservice call will be send. Such CBR system will be described with reference to Figs. 2A-2C.

According to the principle of CBR, only the information about the status of the service-relevant components which are relevant within short to medium time frame is displayed. Accordingly, by providing threshold values individually for each component, the display of the service field is controlled component-wise. E.g., for displaying the service field for "brake fluid", a distance threshold value of 80.000 km could be provided, whereas for displaying the service field for a "particle filter", a distance threshold value of 120.000 km could be provided. Nevertheless it is noted that service fields and corresponding service-relevant status information for certain additional components (e.g. for engine oil or brake pads) are always displayed, independently of the respective component's wear out status.

Referring to Fig. 2A, when everything is ok, only service fields for brake fluid, statutory goods vehicle inspection, handover inspection and engine oil service are displayed (e.g., in green circular surfaces). No information is displayed for service fields such as brake pads front/rear since they are such good/less worn off (e.g. within a new car) that service/maintenance is not required for a long time, as shown by the empty rectangle.

When the vehicles have been used for a given time or travelled for a certain distance, some of the parts, such as the brake pad front may need some maintenance. Referring to Fig. 2B, service field "brake pad front" shows up in the control display (e.g., in yellow circular surface), it indicates that it will need some service within a given time or distance. Still, no information is displayed for other parts such as the brake pad rear since they are such good/less worn off (e.g. have been maintained not long ago) that service/maintenance is not required for a long time.

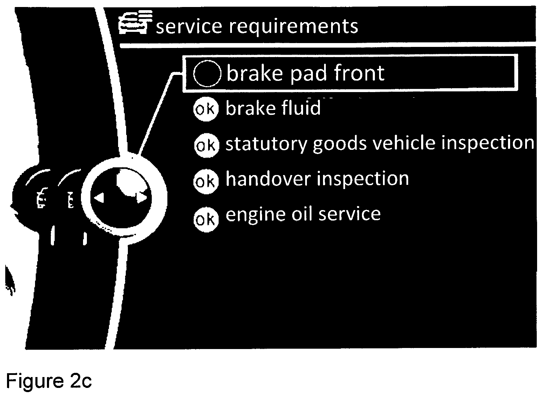

If the driver ignored the maintenance requirements, after a certain time period or distance, the display of the service field for "brake pad front" will be upgraded, such as changes from yellow to red in circular surface, it indicates that it needs some service as soon as possible, as shown in Fig. 2C, so as to maintain the road and operational safety of the vehicle. Still, no information is displayed for other parts such as the brake pad rear since they are such good/less worn off (e.g. have been maintained not long ago) that service is not required for a long time..

Information on maintenance requirements is continually saved in the remote control, the service advisor of the service centre can read out this data from the remote control and suggest a set of routine maintenances optimized on this basis.

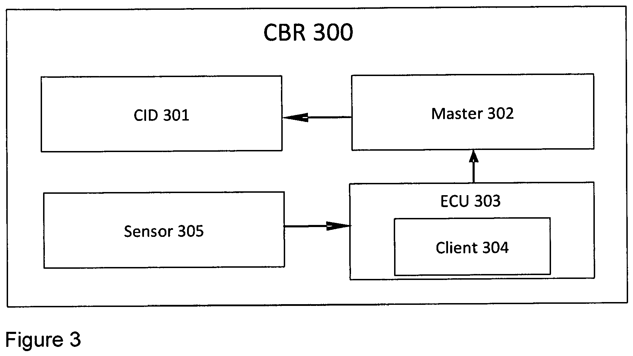

An example block diagram of the CBR system 300 according to an embodiment of the present invention is shown in Fig. 3, the system includes a Central Information Display (CID) 301 for displaying information about the status of service relevant components; a CBR master 302 which is connected to the CID 301; an electronic control unit (ECU) 303 comprising CBR Client 304; and a plurality of sensors 305 connected to the CBR Client 304 and used for sensing the condition of the vehicle, such as the temperature of the motor, the amount of the engine oil, the wear of the brake pad front etc..

In another embodiment, the system 300 also includes an instrument cluster KOMBI (not shown in Fig. 3), the distance to be driven or time to the next maintenance for the service relevant components which are relevant within short to medium time frame can be displayed briefly in the KOMBI after switching on the ignition to remind the driver. In an embodiment, the KOMBI is connected to a teleservice module, which connects the vehicle (e.g. by mobile phone connection) to service dealer and transmits data of the vehicle's corresponding service requirements (e.g. "brake pads front") in advance to service centre when the status of the service relevant components becomes not up to standard. But the data of the service requirements not necessarily need to be automatically forwarded to the service centre at the time when the status of the service relevant components becomes not up to standard. There may be still some delay in terms of time and/or remaining driving distance before the data are transmitted, but the transmittal should be before the status being upgraded, such as changes from yellow to red in circular surface as shown in Fig. 2C which indicates that it needs some service as soon as possible.

According to embodiments of the present invention, a calculation of the respective characteristic value of the respective vehicle components (motor, carriage) could be carried out by respective component-specific algorithms and parameters stored within the clients.

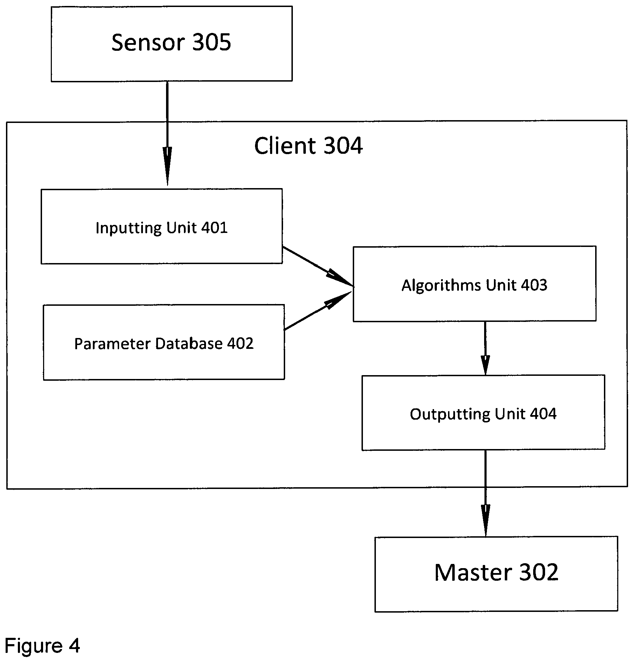

According to an embodiment, the CBR client 304 includes an inputting unit 401 used for reading in data for each service relevant component, such as reading in sensor data from the plurality of sensors 305, reading in distance data from the total distance recorder, and reading in time data from a system clock of the KOMBI. Please note that the time data can also be read in from any other clock which could be provided within the vehicle ECUs. A parameter database 402 is used for storing parameters/values such as the distance to be driven for every maintenance etc., which are typically factory set and remain unchanged during lifetime of the vehicle. The parameters/values may be provided by the vehicle manufacturer. However they might be provided by manufacturers of respective vehicle components as well, e.g. by a manufacturer of a brake system. Algorithms units 403 are used for calculating a remaining distance and characteristic values for each service relevant component. An outputting unit 404 is used for forwarding the calculated values for each service relevant component to the CBR master 302, as shown in Fig. 4.

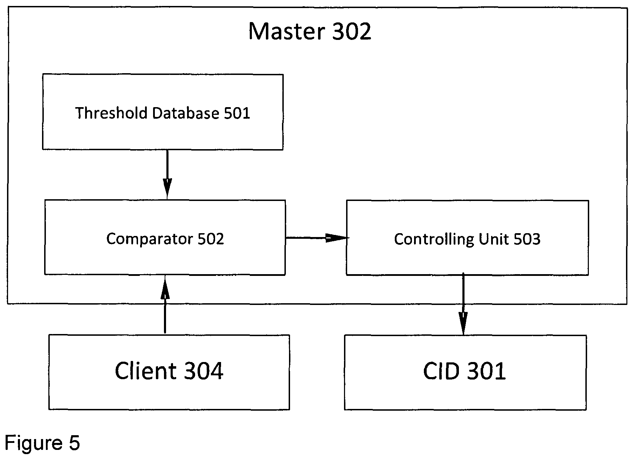

According to an embodiment, as shown in Fig. 5, the master 302 includes a threshold database 501 containing values, e.g. threshold values, or characteristic curves for respective component; a plurality of comparators 502 in which the value of remaining distance input from the client 304 is compared with a given threshold value for the remaining distance stored in the database 501. In addition, the time read in is compared with the corresponding threshold time to the next maintenance stored in the database 501 and the calculated characteristic value for each service relevant component is compared with the corresponding threshold value stored in the threshold database. Furthermore, a control unit is used for controlling the display of the respective service field based on the comparison result. Typically the threshold values and characteristic curves are factory set and remain unchanged during lifetime of the vehicle. However, in principle, they could be changed/modified later, e.g. by a maintenance service dealer.

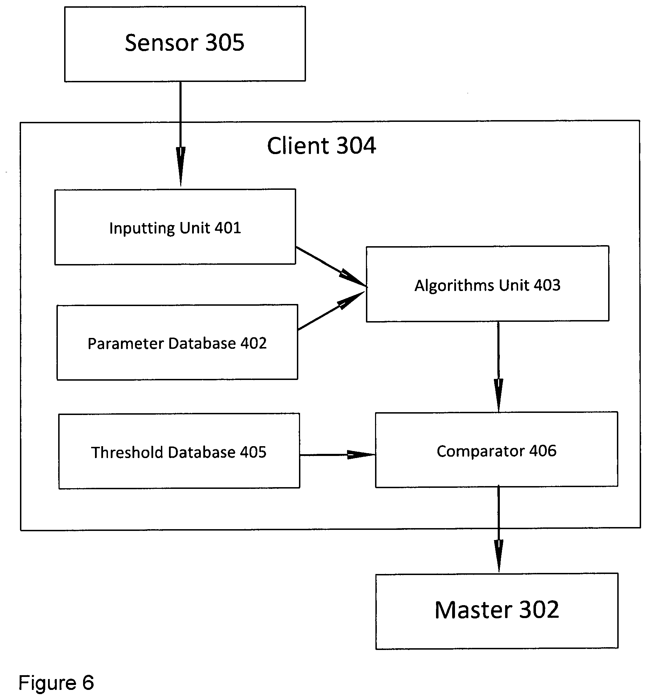

According to another embodiment, all calculations and comparisons are carried out within the respective CBR client and the CBR client only sends a simple signal to the CBR master indicating whether the respective service field shall be displayed or not. In this case, as shown in Fig. 6, the CBR client 304 includes an inputting unit 401 used for reading in data for each service relevant component, such as reading in sensor data from the plurality of sensors 305, reading in distance data from the total distance recorder, and reading in time data from the clock of the KOMBI.A parameter database 402 is used for storing parameters such as the distance to be driven for every maintenance etc. Algorithms units 403 is used for calculating a remaining distance and characteristic values for each service relevant component. A threshold database 405 contains values, e.g. threshold values or values of characteristic curves for a respective component. At least one comparator 406 is provided, in which the value of remaining distance is compared with a given threshold value for the remaining distance stored in the database 405. In addition, the time read in is compared with the corresponding threshold time to the next maintenance stored in the database 405 and the calculated characteristic value for each service relevant component is compared with the corresponding threshold value stored in the threshold database 405. The CBR master controls the display of the respective service field according to the comparison results. Accordingly, only those service fields are displayed for which a respective status is not up to a predetermined standard, in particular if at least one respective measured value and/or calculated characteristic value is over or below a respective threshold value. For example, if a calculated remaining distance of e.g. 4000 km for "brake pad front" is below a threshold value of e.g. 5000 km, the respective service field "brake pad front" is displayed, controlled by CBR master as shown in Fig. 2A. At the same time, a respective symbol indicating the respective service status could be displayed (not shown in Fig. 2A). Accordingly, "brake pad front" can still be considered in status up to standard, i.e. being OK. The symbol for "brake pad front" could thus be shown as a green circular surface containing the word "OK" (not shown in Fig. 2A). Nevertheless, due to display of the service field as such as shown in Fig. 2A, the driver may recognize that the time for maintenance of brake pads is coming closer. Due to this display, the driver may also recognize that he/she should observe the service field for any changes within the near future. Instead of first indicating the green symbol or later on (e.g., if the calculated remaining distance is less than a second threshold value of e.g. 3000 km) the circular surface in service field "brake pad front" may be displayed in yellow or change from green to yellow, respectively, and may contain a warning triangle as shown in Fig. 2B. The circular surface may change from yellow to red if the calculated remaining distance is less than a further threshold value of e.g. 1000 km as shown in Fig. 2C.

Alternatively, the respective characteristic values could be already (pre)calculated by a sensor unit included in the ECU 303 outside of the client 304 which sends such pre-calculated value of the service relevant component to the client.

In an embodiment, the system 300 also includes On Board Diagnostics (OBD) and a total distance recorder (not shown in Fig.3), wherein the OBD is a standardized interface to car diagnostic equipment of service dealer software, the total distance recorder can be used for recording the total distance the vehicle has travelled in real time through a total distance counter.

In another embodiment, the CBR master 302 can be integrated in an electronic control unit (ECU) of the vehicle, e.g. in control unit of the instrument cluster KOMBI or in a central control unit of the vehicle.

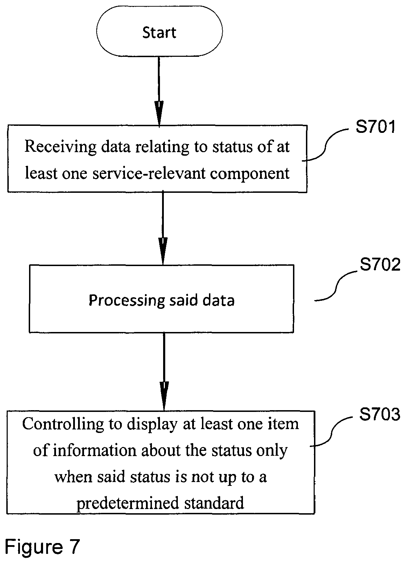

Fig. 7 shows an example flow chart illustrating the process for controlling the display of the service requirements according to an embodiment of the present invention. The flow chart 700 starts when switching on the ignition. At step 701, data relating to status of at least one service-relevant component is received. At step 702, said data is processed. At step 703, at least one item of information about a status is controlled to be displayed only when said status is not up to a predetermined standard.

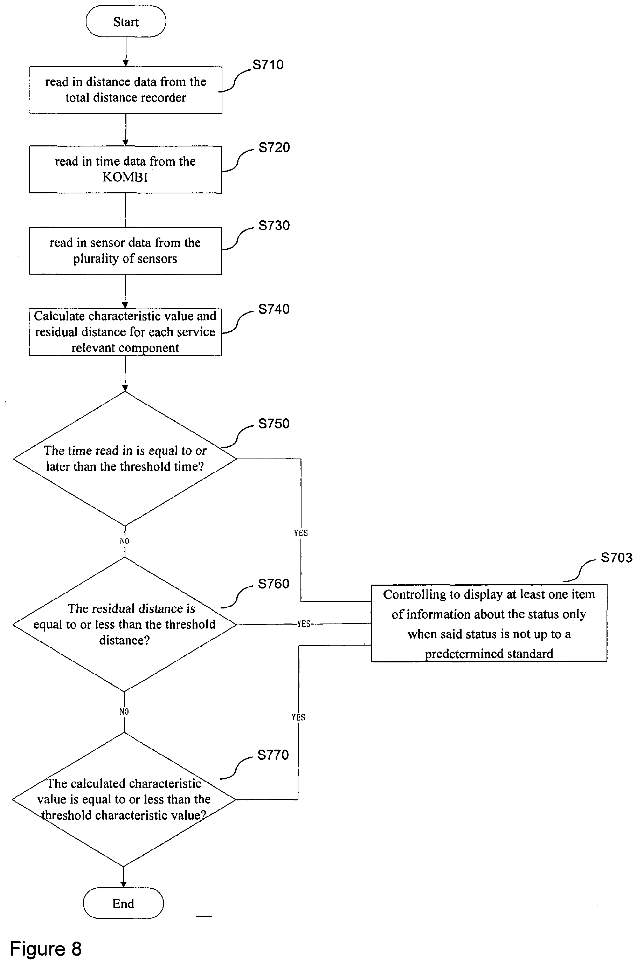

According to embodiments of the present invention, the flow chart 700 can be carried out by the client 304 and the master 302 together. According to another embodiment, as shown in Fig. 8, step 701 can further includes steps 710-730, at step 710, the inputting unit 401 reads in distance data from the total distance recorder, at step 720, the inputting unit 401 reads in time data from the clock of the KOMBI instrument. Please note that the time data can also be read in from any other clock which could be provided within the vehicle ECUs. At step 730, the inputting unit 401 reads in sensor data from the plurality of sensors 305, such as the climate, the wear of each service related component etc.. Step 702 further includes steps 740-770. At step 740, the algorithm unit 403 calculates characteristic value for each service relevant component from respective sensor data, and calculates the residual distance for each service relevant component from the distance data read in. According to the embodiments of the present invention, the residual distance can be calculated by the corresponding sample characteristic value (i.e., the prescribed total distance) to the next maintenance for each service relevant component stored in the parameter database 402 minus the total distance travelled, which can be expressed by the total distance read in. At step 750, the comparator (406, 502) compares the time read in with the corresponding threshold time to the next maintenance stored in the database (405, 501). If the time read in is equal to or later than the threshold time, then the process proceeds to step 703, otherwise the process proceeds to step 760. At step 760, the comparator (406, 502) compares the residual distance for each service relevant component with the corresponding threshold distance to be driven to the next maintenance stored in the database (405, 501), if the residual distance is equal to or less than the threshold distance, then the process proceeds to step 703, otherwise the process proceeds to step 770. At step 770, the comparator (406, 502) compares the calculated characteristic value for each service relevant component with the corresponding threshold value stored in the threshold database (405, 501), if the calculated characteristic value is equal to or less than the threshold characteristic value, then the process proceeds to step 703, otherwise the process ends, no information will be displayed for the relevant service field.

According to embodiments of the present invention, the order of steps 710-730 is changeable. That is to say, the above mentioned time data, distance data and the sensor data can be read-in in any order.

According to embodiments of the present invention, the order of steps 750-770 is also changeable. That is to say, so long as one of the three comparing results is a positive result, the process proceeds to step 703, otherwise the process ends, regardless of the order of the three comparisons.

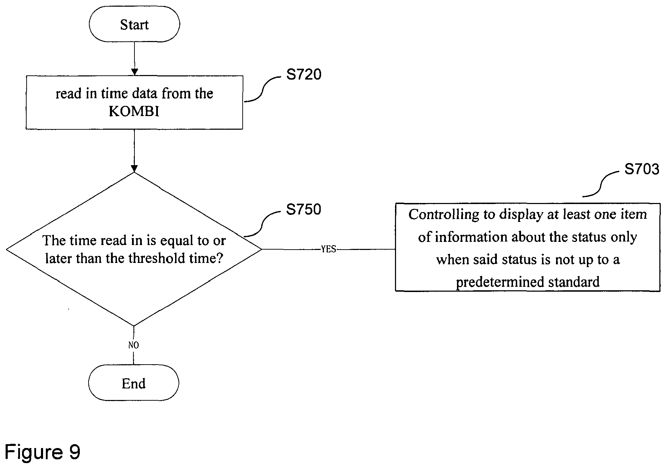

However, it is not necessary for every service relevant component to check for all three values (time, distance, characteristic value) according to steps 750-770 as shown in Fig. 8. Rather, for some components such as the particle filter, it could be sufficient to check only for one or two of the values, e.g. only for time. In this case, steps 710, 730, 740 and 760-770 can be omitted, as shown in Fig. 9.

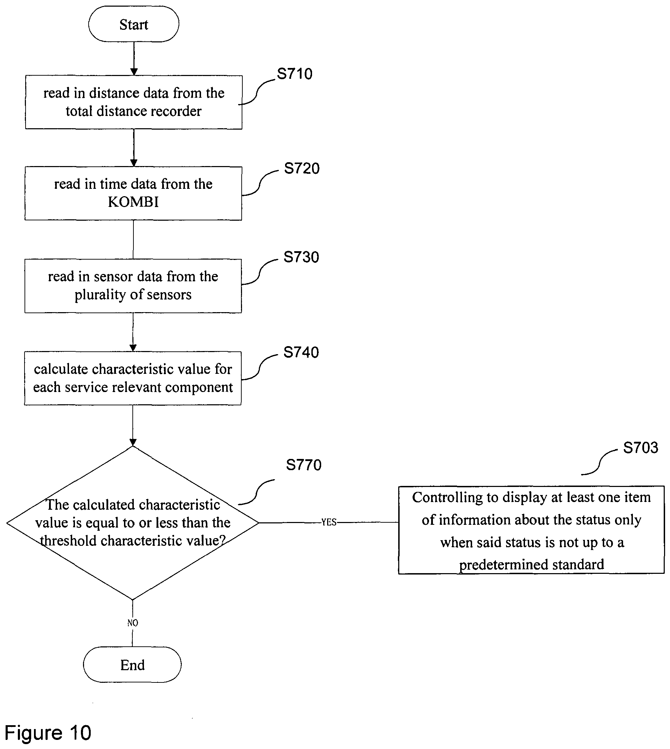

Moreover, according to other embodiments, a value such as the time is within the meaning of a "characteristic value". And the characteristic value can also be calculated based on both time and residual distance values, whether alone, in combination and/or in combination with further values derived from the plurality of sensors. In this case, steps 750-760 can be omitted, as shown in Fig. 10. It will be understood that the steps for controlling the display of the status of each service relevant component can vary among the components.

The algorithm unit 403 calculates characteristic value for each service relevant component from respective sensor data. In an example embodiment of the present invention, in the case that the service relevant component is the brake pad, the sensor data can be the wear condition of the brake pad, in particular, the thickness of the brake pad, thus the characteristic value of the brake pad can be calculated by the corresponding sample characteristic value (i.e., the factory set thickness) of the brake pad minus the thickness read in. similarly, the characteristic value of other service relevant component can also be calculated by the corresponding sample characteristic value(s) minus the corresponding data read in. While in the foregoing the term "brake pad" was used in singular form, it is clear that several brake pads can be checked and evaluated jointly. For example, all brake pads of a respective axle front/rear and/or all brake pads belonging to a specific wheel can be jointly evaluated as a group. In such situation the respective service field can be displayed if at least one of the respective brake pads of the group has a thickness below the respective threshold/sample characteristic value.

The following Table 1 shows some sample characteristic values. The characteristic values correspond to or serve as a basis for calculating at least one "residual value" such as a residual thickness, a residual distance or a residual time etc. until the next service/maintenance action for the respective component is required.

**Table 1: Sample Characteristic Values**

| Component | Sample Characteristic Value(s) |
|---|---|
| Brake | Thickness of Brake Disc (measured by Brake Sensor), |
| | Total Distance (e.g. 60.000 km) |
| Brake Fluid | Age, |
| | Total Distance |
| Engine Oil | Deterioration Value(s) calculated by Motor ECU based on Data of Motor Sensors |
| Battery | Age, |
| | Battery characteristic electric values measured by resp. sensors |
| Particle Filter | Total Distance (e.g. 160.000 km), |
| | Engine Use Data, e.g. numbers of short distance drives and long distance drives, |
| | Particle Filter Sensor Data |

The invention allows a service field to be displayed only if the status of the service relevant component is not up to standard, that is only if the service relevant component is going to be service relevant within a given time or distance. With the CBR system disclosed herein, the information about the status of the service relevant component can be displayed flexibly, such that the critical status of the service relevant component can be recognized from the vehicles and displayed to the driver, and further be sent to the service dealer via the teleservice call (remote service). Upon learning of the condition of the vehicles, the dealer can provide the owner of the vehicle with suggestion in advance and order replacement parts timely. Moreover, the relationship between the dealer and the owner of the vehicle can be further improved through the invented CBR system. Further, the profit margin is increased due to the additional sale of the replacement parts.

Although the present invention is described most specifically with reference to an automobile and its various parts, it may be applied to various mechanized equipment-including but not limited to industrial machinery, heavy equipment, trucks, military vehicles, ships, airplanes, heavy tools and fabrication equipment, and production equipment. Those skilled in the art may clearly know from the above embodiments that the present invention may be implemented by hardware, firmware, or by software with necessary hardware and the like.

The invention being thus described, it will be obvious that the same may be varied in many ways. Such variations are not to be regarded as a departure from the scope of the invention, as defined by the claims.

## Claims

1. A system for controlling the display of at least one service field about the status of at least one service-relevant component of a vehicle, comprising:
a display configured to display said service field;
a master connected to said display;
an electronic control unit (ECU) comprising a client; and
at least one sensor connected to said client and configured to sense the status of said component,
wherein said master is configured to control the display to display said service field about said status only when said status is not up to a standard,
**characterized in that** information on service requirements is continually saved in a remote control.

2. The system of claim 1, wherein the status is the service requirements of the components of the vehicle.

3. The system of claim 2, further comprising:
an instrument cluster for displaying the distance to be driven or time to the next service for a specific period after switching on the ignition.

4. The system of claim 3, further comprising:
a total distance recorder configured to record the total distance travelled through a total distance counter.

5. The system of claim 4, wherein the client includes:
an inputting unit configured to read in the following data for each service relevant component:
sensor data from the plurality of sensors;
distance data from the total distance recorder; and
time data from a clock;
a parameter database containing parameters for each service relevant component;
a plurality of algorithms units configured to calculate remaining distances and characteristic values for each service relevant component; and
an outputting unit configured to forward the calculated remaining distances and characteristic values for each service relevant component to said master.

6. The system of claim 5, wherein the master includes:
a threshold database containing threshold values for each service relevant component;
a plurality of comparators configured to:
compare the calculated remaining distance with corresponding threshold distance stored in the threshold database;
compare the time data with corresponding threshold time stored in the threshold database;
compare the calculated characteristic value with the corresponding threshold value stored in the threshold database; and
a control unit configured to control the display to display the respective service field only when at least one of the following is meet: the time data is equal to or later than the threshold time, the calculated remaining distance is equal to or less than the threshold distance and the calculated characteristic value is equal to or less than the threshold characteristic value.

7. The system of claim 4, wherein the client includes:
an inputting unit configured to read in the following data for each service relevant component:
sensor data from the plurality of sensors;
distance data from the total distance recorder; and
time data from a clock;
a parameter database containing parameters for each service relevant component;
a plurality of algorithms units configured to calculate remaining distances and characteristic values for each service relevant component;
a threshold database containing threshold values for each service relevant component; and
a plurality of comparators configured to:
compare the calculated remaining distance with corresponding threshold distance stored in the threshold database;
compare the time data with corresponding threshold time stored in the threshold database;
compare the calculated characteristic value with corresponding threshold value stored in the threshold database.

8. The system of claim 7, wherein the master includes:
a control unit configured to control the display to display the respective service field only when at least one of the following is meet: the time data is equal to or later than the threshold time, the calculated remaining distance is equal to or less than the threshold distance and the calculated characteristic value is equal to or less than the threshold characteristic value.

9. The system of any one of claims 1-8, further comprising:
a teleservice module connected to the instrument cluster, configured to connect the vehicle to a service centre of a service dealer and to transmit data of the vehicle's service requirements in advance to said service centre when the status of the service relevant component turns to not up to standard.

10. A method for controlling the display of at least one service field about the status of at least one service-relevant component on a display of a vehicle, comprising:
receiving data relating to said status;
processing said data;
displaying said service field about the status on said display only when said status is not up to standard; and
continually saving information on service requirements in a remote control.

11. The method of claim 10, wherein the status is the service requirements of the components of the vehicle.

12. The method of any of claims 10 or 11, wherein processing said data is performed by a client.

13. The method of claim 12, wherein a step of controlling the display to display the service field is performed by a master.

14. The method of any of claims 11-13, wherein both steps of said processing said data and said controlling the display to display the service field are performed by a master.

## Patentansprüche

1. Ein System zum Steuern der Anzeige von zumindest einem Servicefeld in Bezug auf den Status zumindest einer Service-relevanten Komponente eines Fahrzeugs, aufweisend:
eine Anzeige, eingerichtet um das Servicefeld anzuzeigen;
einen Master, welcher mit der Anzeige verbunden ist;
eine elektronische Steuereinheit (ECU), welche einen Client aufweist; und
zumindest einen Sensor, welcher mit dem Client verbunden ist und eingerichtet ist, den Status der Komponente in Erfahrung zu bringen,
wobei der Master eingerichtet ist, die Anzeige zu steuern, um das Servicefeld in Bezug auf den Status nur dann anzuzeigen, wenn der Status nicht einem Standard entspricht, **dadurch gekennzeichnet, dass** Information in Bezug auf Serviceerfordernisse kontinuierlich in einer Fernsteuerung gespeichert werden.

2. System nach Anspruch 1, wobei der Status die Service-Erfordernisse der Komponenten des Fahrzeugs sind.

3. System nach Anspruch 2, des Weiteren aufweisend:
ein Instrumenten-Cluster zum Anzeigen der zurückzulegenden Distanz oder der Zeit bis zum nächsten Service über einen bestimmten Zeitraum nach dem Schalten der Zündung.

4. System nach Anspruch 3, des Weiteren aufweisend:
einen Gesamtdistanzrekorder, eingerichtet um die zurückgelegte Gesamtdistanz durch einen Gesamtdistanzzähler aufzuzeichnen.

5. System nach Anspruch 4, wobei der Client einschließt:
eine Eingabeeinheit, eingerichtet um die folgenden Daten für jede Service-relevante Komponente zu lesen:
Sensordaten von der Mehrzahl an Sensoren;
Distanzdaten von dem Gesamtdistanzrekorder; und
Zeitdaten von einer Uhr;
eine Parameterdatenbank, welche Parameter für jede Service-relevante Komponente enthält;
eine Mehrzahl von Algorithmus-Einheiten, welche eingerichtet sind, verbliebene Distanzen und charakteristische Werte für jede Service-relevante Komponente zu berechnen; und
eine Ausgabeeinheit, eingerichtet um die berechneten verbleibenden Distanzen und charakteristischen Werte für jede Service-relevante Komponente an den Master weiterzuleiten.

6. System nach Anspruch 5, wobei der Master aufweist:
eine Schwellwert-Datenbank, welche Schwellwerte für jede Service-relevante Komponente aufweist;
eine Mehrzahl an Vergleichern, eingerichtet um:
die berechnete verbleibende Distanz mit der entsprechenden Schwellwert-Distanz, welche in der Schwellwert-Datenbank gespeichert ist, zu vergleichen;
die Zeitdaten mit der entsprechenden Schwellwert-Zeit, welche in der Schwellwert-Datenbank gespeichert ist, zu vergleichen;
den berechneten charakteristischen Wert mit dem entsprechenden Schwellwert, welcher in der Schwellwert-Datenbank gespeichert ist, zu vergleichen; und
eine Steuereinheit, eingerichtet um die Anzeige zu steuern, dass diese die jeweiligen Servicefelder nur dann anzeigt, wenn zumindest eines der folgenden erfüllt ist: die Zeitdaten sind gleich oder später als die Schwellwert-Zeit, die berechnete verbliebene Distanz ist gleich oder weniger als die Schwellwert-Distanz und der berechnete charakteristische Wert ist gleich oder weniger als der Schwellwertcharakteristische Wert.

7. System nach Anspruch 4, wobei der Client aufweist:
eine Eingabeeinheit, eingerichtet um die folgenden Daten für jede Service-relevante Komponente einzulesen:
Sensordaten von der Mehrzahl von Sensoren;
Distanzdaten von dem Gesamtdistanzrekorder; und
Zeitdaten von einer Uhr;
eine Parameterdatenbank, welche Parameter für jede Service-relevante Komponente enthält;
eine Mehrzahl von Algorithmen-Einheiten, welche eingerichtet sind, um die verbleibenden Daten und charakteristischen Werte für jede Service-relevante Komponente zu berechnen;
eine Schwellwert-Datenbank, welche Schwellwerte für jede Service-relevante Komponente enthält; und
eine Mehrzahl von Vergleichern, eingerichtet um:
die berechnete verbleibende Distanz mit der entsprechenden Schwellwert-Distanz, welche in der Schwellwert-Datenbank gespeichert ist, zu vergleichen;
die Zeitdaten mit der entsprechenden Schwellwert-Zeit, welche in der Schwellwert-Datenbank gespeichert ist, zu vergleichen;
den berechneten charakteristischen Wert mit dem entsprechenden Schwellwert, welcher in der Schwellwert-Datenbank gespeichert ist, zu vergleichen.

8. System nach Anspruch 7, wobei der Master aufweist:
eine Steuereinheit, eingerichtet um die Anzeige zu steuern, dass diese die jeweiligen Servicefelder nur dann anzeigt, wenn zumindest eines der folgenden erfüllt wird: die Zeitdaten sind gleich oder später als die Schwellwert-Zeit, die berechnete verbleibende Distanz ist gleich oder weniger als die Schwellwert-Distanz und der berechnete charakteristische Wert ist gleich oder weniger als der Schwellwertcharakteristische Wert.

9. System nach einem der Ansprüche 1 bis 8, des Weiteren aufweisend:
ein Teleservice-Modul, welches mit dem Instrumenten-Cluster verbunden ist, eingerichtet um das Fahrzeug mit einem Service-Center eines Service-Händlers zu verbinden und um Daten der Service-Erfordernisse des Fahrzeugs vorab zu dem Service-Center zu übermitteln, wenn der Status der Service-relevanten Komponente sich so verändert, dass er nicht mehr einen Standard erfüllt.

10. Verfahren zum Steuern der Anzeige von zumindest einem Servicefeld in Bezug auf den Status zumindest einer Service-relevanten Komponente auf einer Anzeige eines Fahrzeugs, aufweisend:
Empfangen von Daten in Bezug auf den Status;
Verarbeiten der Daten;
Anzeigen des Servicefelds in Bezug auf den Status auf der Anzeige nur, wenn der Status nicht einen Standard erfüllt; und
kontinuierliches Speichern von Informationen über die Service-Erfordernisse in einer Fernsteuerung.

11. Verfahren nach Anspruch 10, wobei der Status die Service-Erfordernisse der Komponenten des Fahrzeugs sind.

12. Verfahren nach einem der Ansprüche 10 oder 11, wobei die Verarbeitung der Daten durch einen Client ausgeführt wird.

13. Verfahren nach Anspruch 12, wobei ein Arbeitsschritt des Steuerns der Anzeige, um die Servicefelder anzuzeigen, von einem Master ausgeführt wird.

14. Verfahren nach einem der Ansprüche 11 bis 13, wobei beide Arbeitsschritte der Verarbeitung der Daten und des Steuerns der Anzeige, um das Servicefeld anzuzeigen, durch einen Master ausgeführt werden.

## Revendications

1. Système pour commander l'affichage d'au moins un champ de service concernant l'état d'au moins un composant relatif à un service d'un véhicule, comprenant :
un dispositif d'affichage configuré pour afficher ledit champ de service ;
un maître connecté audit dispositif d'affichage ;
une unité de commande électronique (ECU) comprenant un client ; et
au moins un capteur connecté audit client et configuré pour détecter l'état dudit composant,
dans lequel ledit maître est configuré pour commander l'affichage pour afficher ledit champ de service concernant ledit état uniquement quand ledit état n'est pas à la hauteur d'une norme,
**caractérisé en ce que** des informations concernant des exigences de service sont sauvegardées en continu dans une commande à distance.

2. Système selon la revendication 1, dans lequel l'état est les exigences de service des composants du véhicule.

3. Système selon la revendication 2, comprenant en outre :
un groupe d'instruments pour afficher la distance à parcourir ou le temps jusqu'au prochain service pendant une période spécifique après commutation de l'allumage.

4. Système selon la revendication 3, comprenant en outre :
un enregistreur de distance totale configuré pour enregistrer la distance totale parcourue par le biais d'un compteur de distance totale.

5. Système selon la revendication 4, dans lequel le client inclut :
une unité d'entrée configurée pour lire les données suivantes pour chaque composant relatif à un service :
des données de capteur provenant de la pluralité de capteurs ;
des données de distance provenant de l'enregistreur de distance totale ; et
des données de temps provenant d'une horloge ;
une base de données de paramètres contenant des paramètres pour chaque composant relatif à un service ;
une pluralité d'unités d'algorithmes configurées pour calculer des distances restantes et des valeurs caractéristiques pour chaque composant relatif à un service ; et
une unité de sortie configurée pour faire suivre les distances restantes et les valeurs caractéristiques calculées pour chaque composant relatif à un service audit maître.

6. Système selon la revendication 5, dans lequel le maître inclut :
une base de données de seuils contenant des valeurs de seuil pour chaque composant relatif à un service ;
une pluralité de comparateurs configurés pour :
comparer la distance restante calculée à une distance seuil correspondante stockée dans la base de données de seuils ;
comparer les données de temps à un temps seuil correspondant stocké dans la base de données de seuils ;
comparer la valeur caractéristique calculée à la valeur caractéristique correspondante stockée dans la base de données de seuils ; et
une unité de commande configurée pour commander l'affichage pour afficher le champ de service respectif uniquement quand au moins l'une des conditions suivantes est satisfaite : les données de temps sont égales ou ultérieures au temps seuil, la distance restante calculée est égale ou inférieure à la distance seuil et la valeur caractéristique calculée est égale ou inférieure à la valeur caractéristique seuil.

7. Système selon la revendication 4, dans lequel le client inclut :
une unité d'entrée configurée pour lire les données suivantes pour chaque composant relatif à un service :
des données de capteur provenant de la pluralité de capteurs ;
des données de distance provenant de l'enregistreur de distance totale ; et
des données de temps provenant d'une horloge ;
une base de données de paramètres contenant des paramètres pour chaque composant relatif à un service ;
une pluralité d'unités d'algorithmes configurées pour calculer des distances restantes et des valeurs caractéristiques pour chaque composant relatif à un service ;
une base de données de seuils contenant des valeurs de seuil pour chaque composant relatif à un service ; et
une pluralité de comparateurs configurés pour :
comparer la distance restante calculée à une distance seuil correspondante stockée dans la base de données de seuils ;
comparer les données de temps à un temps seuil correspondant stocké dans la base de données de seuils ;
comparer la valeur caractéristique calculée à la valeur caractéristique correspondante stockée dans la base de données de seuils.

8. Système selon la revendication 7, dans lequel le maître inclut :
une unité de commande configurée pour commander pour commander l'affichage pour afficher le champ de service respectif uniquement quand au moins l'une des conditions suivantes est satisfaite : les données de temps sont égales ou ultérieures au temps seuil, la distance restante calculée est égale ou inférieure à la distance seuil et la valeur caractéristique calculée est égale ou inférieure à la valeur caractéristique seuil.

9. Système selon l'une quelconque des revendications 1 à 8, comprenant en outre :
un module de téléservices connecté au groupe d'instruments, configuré pour connecter le véhicule à un centre de services d'un prestataire de services et pour transmettre des données des exigences de services du véhicule à l'avance audit centre de services quand l'état du composant relatif au service ne passe pas à la norme.

10. Procédé pour commander l'affichage d'au moins un champ de service concernant l'état d'au moins un composant relatif à un service sur un dispositif d'affichage d'un véhicule, comprenant :
l'affichage de données se rapportant audit état ;
le traitement desdites données ;
l'affichage dudit champ de service concernant l'état sur ledit dispositif d'affichage uniquement quand ledit état n'est pas à la norme ; et
la sauvegarde en continu d'informations concernant des exigences de services dans une commande à distance.

11. Procédé selon la revendication 10, dans lequel l'état est les exigences de service des composants du véhicule.

12. Procédé selon l'une quelconque des revendications 10 ou 11, dans lequel ledit traitement desdites données est effectué par un client.

13. Procédé selon la revendication 12, dans lequel une étape consistant à commander l'affichage pour afficher le champ de service est effectuée par un maître.

14. Procédé selon l'une quelconque des revendications 11 à 13, dans lequel les deux étapes dudit traitement desdites données et de ladite commande de l'affichage pour afficher le champ de service sont effectuées par un maître.
